# DEMANDE DE BREVET EUROPEEN

(11) **EP 1 722 039 A1**
(43) Date de publication de la demande: **15.11.2006**
(21) Numéro de dépôt: 06008912.5
(22) Date de dépôt: 28.04.2006
(51) Int. Cl.: E03B 3/03

(54) **Dispositif de stockage des eaux pluviales**

(30) Priorité: 03.05.2005 FR 0504491
(71) Demandeur: Lachaux, Laurent, 01170 Crozet (FR)
(72) Inventeur: Lachaux, Laurent, 01170 Crozet (FR)
(74) Mandataire: Moinas, Michel

(57) **Abrégé**

Dispositif de stockage des eaux pluviales destiné à être raccordé à une gargouille ou à une amorce de tuyau de descente des eaux d'une gouttière ou d'un chéneau. Ce dispositif comprend une pluralité de modules (10, 10a, 10b, 10c) étagés et reliés les uns aux autres par des moyens de raccordement (20) incluant au moins une entrée (12), une sortie d'eau (13) et une évacuation d'air (35). Il comprend également au moins une colonne (1) de ces modules (10) dans laquelle au moins les modules (10a, 10b) disposés au-dessus de celui du plus bas étage (10c) comprennent chacun au moins un siphon (30) dont l'extrémité aval (33) est reliée au module d'étage immédiatement inférieur par lesdits moyens de raccordement (20).

## Description

La présente invention a pour objet un dispositif de stockage des eaux pluviales destiné à être raccordé à une gargouille ou une amorce de tuyau de descente des eaux d'une gouttière ou d'un chéneau d'un toit de bâtiment.

Il existe de nombreux dispositifs de stockage d'eaux de pluie collectées par la surface de la toiture de bâtiments en tout genre. Parmi ces dispositifs on mentionnera celui décrit dans le document US 6,357,138 dans lequel il a été prévu d'installer le réservoir de collecte des eaux en lieu et place du chéneau. L'inconvénient de ce dispositif réside essentiellement dans le fait que lorsque le réservoir est plein, une masse très importante est suspendue le long du bord de la toiture, ce qui nécessite de prévoir une structure renforcée et pourvue d'ancrages spécialement adaptés pour pouvoir maintenir en toute sécurité une telle masse en suspension.

Les documents DE 202'13'591 U1 et DE 296'11'053 U1 décrivent un autre type de dispositif comprenant une pluralité de réservoirs disposés au sol et raccordés les uns aux autres par une conduite de liaison située en leurs fonds. L'inconvénient de cet agencement réside dans le fait qu'un tel alignement de réservoirs occupe une place importante au sol.

Le document US 5,730,179 divulgue un réservoir de forme cylindrique, destiné à être agencé en lieu et place d'une descente des eaux s'écoulant depuis une gouttière de toit. A cet effet, ce dispositif comprend un seul réservoir de grande hauteur dont la partie supérieure est raccordée via une grille à une amorce de tuyau de descente des eaux. La partie inférieure comprend un robinet de soutirage de l'eau stockée. Des ouvertures sont disposées dans la partie supérieure de ce réservoir et font office de trop-plein. Cette installation comprend plusieurs inconvénients. Le plus important réside dans le fait que l'eau soutirée à la base du réservoir est nécessairement chargée de limons et autres particules récoltées à la surface de la toiture et qui n'ont pas pu être retenues par la grille de filtrage. Dans le cas où cette eau chargée est destinée par exemple à un arrosage par goutte à goutte ou par tuyau percé d'une multitude de micro trous, l'eau chargée de limon et injectée sous pression dans un tel tuyau d'arrosage va rapidement obstruer les ouvertures d'arrosage. Avec l'emploi de dispositifs d'arrosage tels qu'un dispositif oscillant ou un arrosage fixe de type bruine, outre le risque d'obstruction des ouvertures, s'ajoute l'usure mécanique créée par l'injection sous pression de l'eau chargée sur les pièces du dispositif. Un autre inconvénient de ce dispositif réside dans le fait que l'écoulement du trop-plein s'effectue le long de la surface extérieure du réservoir. Dans une configuration de terrain non pentu, cette pratique peut noyer l'assise de ce réservoir et rendre le terrain plus meuble. Il peut alors s'ensuivre une déstabilisation du réservoir et/ou une rupture de sa connexion à l'amorce de la descente des eaux.

Le document US 5,873,383 décrit un dispositif de stockage des eaux pluviales dans une des variantes duquel il est suggéré de superposer une pluralité de réservoirs pour obtenir en tout un volume de stockage important. Les différentes unités de stockage sont reliées entre elles dans ce dispositif par des conduits de trop-plein étagés qui déversent le trop-plein d'eau du réservoir supérieure dans le réservoir immédiatement inférieur. L'inconvénient de ce dispositif réside dans le fait que lorsque le volume de stockage n'est pas totalement rempli d'eau, ce sont les unités de stockage supérieures qui stockent cette eau alors que celles se trouvant aux étages inférieurs restent vides. La masse d'eau est ainsi maintenue en hauteur ce qui ne favorise pas la stabilité de la structure qui porte l'ensemble des unités de stockage. Pour résoudre ce problème il a été prévu dans ce dispositif de relier encore les différentes unités par leur fond à une conduite additionnelle, et d'équiper les raccords de ces fonds avec des vannes de non-retour. L'inconvénient de cette solution réside dans le fait qu'il est nécessaire de prévoir l'agencement de telles vannes, que ces dernières sont onéreuses et qu'elles doivent être dimensionnées pour pouvoir résister à des pressions différentes en fonction de la hauteur de l'unité de stockage qu'elles équipent.

Le but de la présente invention vise à remédier au moins en partie aux inconvénients susmentionnés de manière notamment à obtenir une eau de soutirage claire, non-chargée en limon, ainsi qu'une meilleure stabilité du volume d'eau stocké. Un autre but visé est d'obtenir un dispositif qui soit de construction et de mise en oeuvre simple, tout en étant fiable et peu onéreux. L'objet de la présente invention vise également un dispositif qui soit de maintenance et d'entretient facile.

A cet effet, l'invention a pour objet un dispositif de stockage des eaux pluviales destiné à être raccordé à une gargouille ou à une amorce de tuyau de descente des eaux d'une gouttière ou d'un chéneau, comprenant une pluralité de modules étagés et reliés les uns aux autres par des moyens de raccordement. Ce dispositif comprend au moins une colonne de ces modules dans laquelle au moins les modules disposés au-dessus de celui du plus bas étage comprennent chacun au moins un siphon dont l'extrémité aval est reliée au module d'étage immédiatement inférieur par lesdits moyens de raccordement.

Grâce à cet agencement, le transfert vers les étages inférieurs du volume d'eau récolté en premier lieu par les modules supérieurs se réalise automatiquement en cascades successives. Avantageusement, ce transfert évite le stockage de masses d'eau importantes dans les étages supérieurs et améliore de ce fait la stabilité et la sécurité de l'ensemble du dispositif. Avantageusement encore, ce dispositif permet d'obtenir une filtration des eaux pluviales par décantations successives à chaque étage. Ceci permet d'assurer que l'eau soutirée à la base du dispositif soit exempte de dépôts limoneux.

D'autres caractéristiques et avantages apparaîtront à la lumière de la description qui va suivre et qui décrit un mode de réalisation préféré de l'objet de la présente invention, pris à titre nullement limitatif et illustré par les figures annexées dans lesquelles:
La figure 1 est une vue schématique en coupe verticale du dispositif de l'invention.
La figure 2 est une vue schématique d'un des modules du dispositif de la présente invention.
La figure 3 est une vue schématique d'un détail de la figure 1.
La figure 4 est une vue schématique du dispositif de la figure 1 agencé dans une seconde configuration.

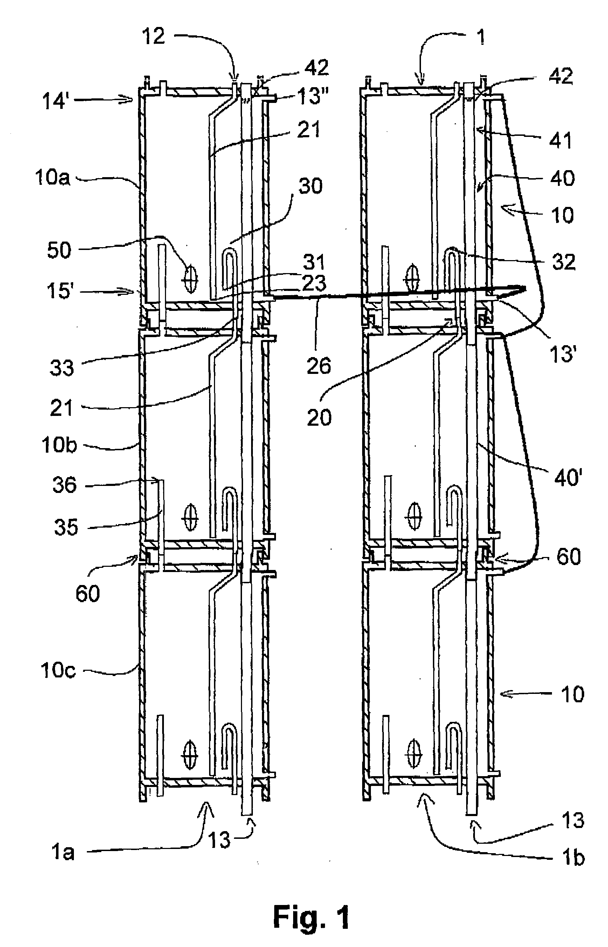

En référence à la figure 1, celle-ci illustre le dispositif de stockage des eaux pluviales de la présente invention suivant une première disposition possible. Cette dernière correspond à un agencement vertical d'au moins une colonne 1, chacune formée d'une pluralité de modules 10 étagés et reliés les uns aux autres par des moyens de raccordement 20. A titre d'exemple, la figure 1 illustre un dispositif formé de deux colonnes 1a, 1b comprenant chacune trois modules 10a, 10b, 10c superposés. Les modules de plus haut et de plus bas étage étant respectivement les modules 10a et 10c.

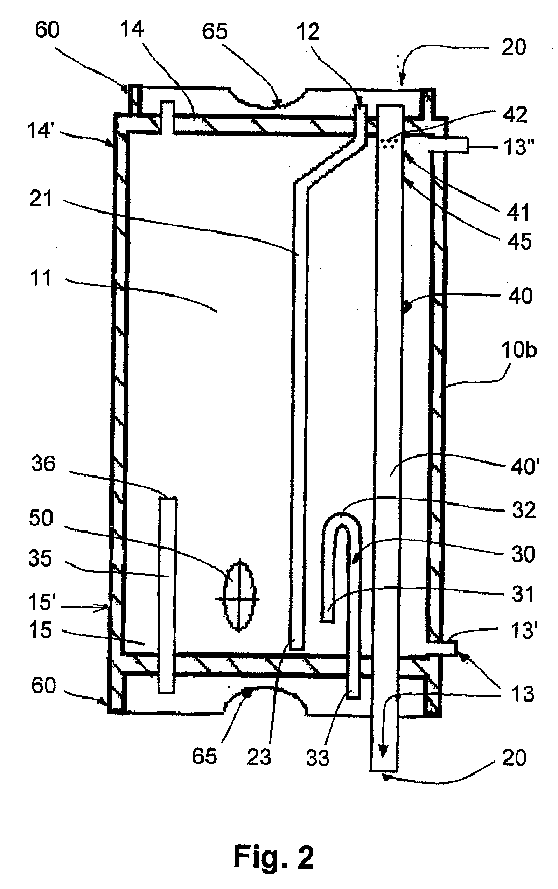

La figure 2 donne une illustration détaillée d'un des modules illustrés à la figure 1, en l'occurrence le module intermédiaire 10b. Un tel module 10 est formé d'un réservoir 11 définissant par sa taille le volume d'eau qu'il peut contenir. Les moyens de raccordement qui permettent de relier ce module à d'autres modules semblables, incluent au moins une entrée 12, au moins une sortie 13 pour l'eau de pluie et une évacuation d'air 35 qui sera décrite plus après. De préférence, les moyens de raccordement d'au moins un des modules 10 comprennent au moins un tuyau d'amenée 21 traversant la paroi supérieure 14 de ce module par l'entrée 12 et débouchant en son extrémité aval 23 dans la partie inférieure 15' de ce dernier. Selon le mode de réalisation préféré, le module 10a du plus haut étage est pourvu d'un tel tuyau d'amenée 21 qui est destiné à venir se raccorder à une gargouille ou à une amorce de tuyau de descente des eaux non représentées.

De manière à pouvoir transférer automatiquement la masse d'eau contenue dans le réservoir 11 d'un module vers le réservoir du module inférieur, au moins les modules 10a, 10b disposés au-dessus du module 10c du plus bas étage comprennent chacun au moins un siphon 30 dont l'extrémité aval 33 est reliée au module d'étage immédiatement inférieur, plus précisément à la portion amont de son tuyau d'amenée 21 ou du moins à son entrée 12, par les moyens de raccordement 20. De tels moyens de raccordement peuvent être constitués par exemple de manchons permettant l'aboutement de deux tuyaux par emboîtement. Afin d'éviter l'aspiration de limons déposés par décantation dans le fond intérieur 15 du module 10, l'extrémité amont 31 du siphon 30 se situe à plus grande distance du fond intérieur 15 que n'est l'extrémité aval 23 du tuyau d'amenée 21.

Comme mieux visible sur la figure 2, une évacuation d'air formée d'un tuyau d'air 35 est agencé dans chaque module 10 afin de permettre à l'air de circuler d'un module à l'autre au fur et à mesure de leur remplissage. Pour ce faire, ce tuyau d'air traverse le fond intérieur 15 du module ainsi que la paroi supérieure 14 du module immédiatement inférieur. L'extrémité supérieure 36 de ce tuyau d'air 35 est située à un niveau supérieur à celui de l'extrémité supérieure 32 du siphon 30 de façon à ne pas court-circuiter ce dernier.

Selon le mode de réalisation préféré, les modules 10a, 10b, 10c d'une même colonne 1 sont traversés par au moins un tuyau dit de trop-plein 40 comprenant au moins une ouverture d'évacuation 42 située dans la partie interne supérieure 14' du module 10a de plus haut étage. Lorsque les réservoirs de tous les modules sont pleins, l'eau excédentaire introduite dans le dispositif de stockage s'écoulera au travers des ouvertures d'évacuation 42 dans le tuyau de trop-plein 40. L'extrémité aval de ce dernier pourra alors être raccordée directement au regard d'évacuation des eaux usées. De préférence, le tuyau de trop-plein 40 est constitué par l'aboutement étanche d'une pluralité de tronçons 40' agencés à l'intérieur des modules 10 à raison d'au moins un tronçon 40' par module.

Grâce à ce mode de réalisation, le dispositif de stockage de la présente invention peut être réalisé par assemblage d'un nombre quelconque de modules 10 indépendants.

Le siphon 30 du module 10a du plus haut étage a son extrémité supérieure 32 située en dessous du niveau de l'ouverture d'évacuation 42 du tuyau de trop-plein 40. Cette caractéristique permet d'assurer un bon amorçage de son siphon 30 et de ce fait de vider son réservoir 11 d'une manière continue dès l'amorçage de ce siphon.

Selon le mode de réalisation préféré, chaque tronçon 40' de tuyau de trop-plein comprend dans sa partie interne supérieure 41 au moins une ouverture d'évacuation 42, ainsi qu'un moyen d'obstruction 45 apte à stopper l'écoulement des eaux au travers de cette ouverture. Par ce biais, tous les tronçons 40' pourront être avantageusement identiques et comprendre des ouvertures 42. Constitué de préférence par l'emboîtement de deux tronçons 40' adjacents, ce moyen d'obstruction 45 permet alors d'empêcher que l'eau puisse s'écouler vers le bas par le tuyau de trop-plein pour tous les modules 10b, 10c situés en dessous du module 10a de plus haut étage.

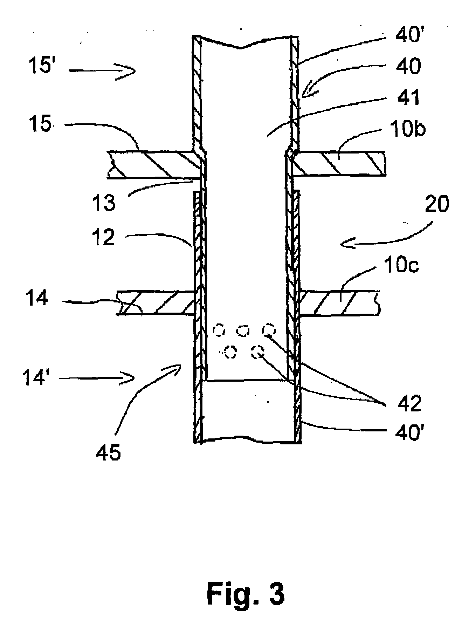

Comme mieux visible sur la figure 3, celle-ci illustre de manière schématique pour les modules 10b et 10c, un aboutement des deux tronçons 40' correspondants du tuyau de trop-plein. Il est prévu qu'un tel aboutement soit réalisé par emboîtement du tronçon 40' du module supérieur, au moins jusqu'au niveau des ouvertures d'évacuation 42 du tronçon du module inférieur. De la sorte, l'écoulement des eaux est obstrué soit par l'emboîtement de l'extrémité aval du tronçon 40 du module supérieur dans celui du module inférieur en bouchant directement les ouvertures d'évacuation 42 de ce dernier tronçon, soit en obstruant au moyen de cet emboîtement la partie qui se trouve directement en aval de ces ouvertures.

En revenant à l'illustration donnée à la figure 2, on remarque qu'une trappe de visite 50 se trouve ménagée dans la partie inférieure 15' du module, plus précisément de son réservoir 11. Cette trappe est destinée à la maintenance du réservoir en vue de permettre d'une part l'accès au fond intérieur 15 du module, et d'autre part un contact visuel avec ce dernier suivant une variante préférée. De ce fait, il devient aisé de pouvoir contrôler l'état du fond intérieur 15 de chacun des modules et de pouvoir nettoyer ce fond de toutes les impuretés récoltées, comme les limons charriés par les eaux du toit et qui se sont amoncelés au fond du réservoir.

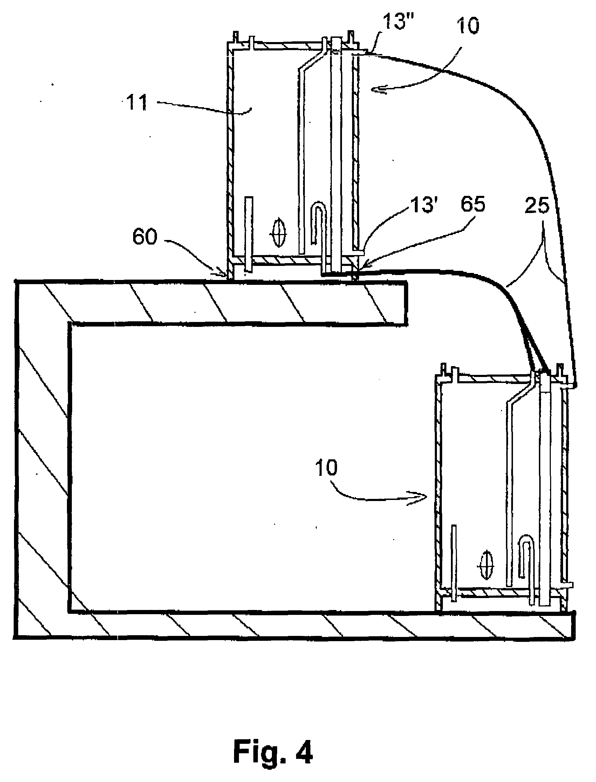

Comme bien visible sur la figure 1, les modules 10 sont de préférence empilés les uns sur les autres suivant un axe vertical de sorte à former au moins une colonne 1. Pour ce faire, chaque module comprend dans ses parties externes supérieure et inférieure, un moyen d'assemblage 60. Ce moyen pouvant être par exemple constitué de couronnes saillantes, dont l'une d'entre elles possède un diamètre supérieur à l'autre afin de pouvoir les joindre lorsqu'elles sont mises en correspondance. De telles couronnes servent également de renforts et d'assise à chacun des modules. En outre et comme mieux visible sur la figure 2, ces moyens d'assemblage seront chacun pourvus d'une échancrure ou d'une ouverture de raccordement 65 utile dans la configuration décrite ci-dessous en référence à la figure 4.

La figure 4 donne une illustration d'une seconde configuration possible de l'objet de la présente invention. Dans le cas d'une topographie présentant un terrain pentu ou étagé en terrasse au droit de la gouttière, il est prévu qu'au moins un module 10 d'au moins une colonne 1 du dispositif de stockage puisse être désaxé par rapport à l'axe vertical du ou des autres modules adjacents. Dans ce cas, les moyens de raccordement de deux modules sont réalisés au moins en partie par des tuyaux flexibles, de préférence regroupés dans un seul conduit souple 25. Ce dernier étant destiné à passer au travers de l'ouverture de raccordement 65 de chaque module pour ne pas être écrasé sous le poids de ce dernier lorsque son réservoir est rempli d'eau.

De préférence chaque module 10 est pourvu d'au moins une sortie de soutirage 13', 13" de l'eau contenue dans son réservoir. Dans la pratique, seule la sortie de soutirage du module 10c du plus bas étage sera normalement employée pour l'utilisation de l'ensemble du volume que forme la totalité des réservoirs du dispositif de stockage. Cependant et comme illustré dans la figure 1, lorsque ce dispositif comporte plus d'une colonne 1, les sorties de soutirage 13' des modules 10a du plus haut étage de ces colonnes peuvent être raccordés par un tuyau flexible 26 de sorte à faire fonctionner ces colonnes en parallèles.

Avantageusement, les sorties de soutirages 13', 13", de même que les moyens de raccordement des modules, peuvent être équipés de raccords rapides dans le but de permettre une connexion et un emboîtement direct des tuyaux et/ou des modules superposés entre eux.

En variante du tuyau d'air 35 tel que décrit précédemment, ce dernier pourrait être agencé à l'extérieur des modules 10 en reliant les unes au autres toutes les sorties de soutirages 13". Dans ce cas les tuyaux d'air 35 pourraient être constitués de tuyaux souples dont les extrémités adjacentes seraient connectées à une même sortie de soutirage 13" au moyen d'un raccord en T par exemple. Afin que le tuyau de trop plein 40 puisse pleinement jouer sa fonction, les sorties de soutirage 13" seraient alors situées à un niveau plus élevé que celui des ouvertures 42.

Selon le mode de réalisation préféré, tous les modules 10a, 10b, 10c sont identiques. Avantageusement, cela permettra d'éviter d'imposer un ordre de montage particulier pour réaliser l'assemblage du dispositif de stockage.

Le fonctionnement du dispositif de stockage de la présente invention est le suivant. L'eau de pluie récoltée du toit d'un bâtiment s'écoule dans le réservoir 11 du premier module 10a, via son tuyau d'amenée 21 raccordé à une gargouille ou à une amorce de tuyau de descente des eaux. Débouchant sans jaillir dans la partie inférieure 15' du tuyau d'amenée, cette eau rempli progressivement le premier réservoir de même que le siphon 30 de ce premier module 10a. Il va sans dire que les sorties 13 du modules 10c de plus bas étage sont fermées de même que les sorties de soutirages 13', 13" des modules 10a et 10b au moins. Lorsque le niveau de l'extrémité supérieure 32 de ce siphon est dépassé, ce dernier s'amorce jusqu'à vider le réservoir du module 10a dans celui du module 10b grâce au raccordement de l'extrémité aval 33 du siphon supérieur à l'extrémité amont du tuyau d'amenée 21 du module inférieur 10b. Par ce moyen, il se crée un transvasement automatique en cascade de l'eau d'un module supérieur vers le module directement inférieur. Les réservoirs supérieurs se vident jusqu'au niveau correspondant à celui de l'extrémité amont 31 du siphon 30. De ce fait, les limons et autres dépôts ne sont, du moins en partie, pas transférés dans le module inférieur. Par plusieurs transferts successifs, on obtient ainsi dans le module 10c de plus bas étage une eau claire dépourvue de tout limon.

Dans le cas où les modules sont dédoublés en deux ou plusieurs colonnes 1a, 1b à l'aide de tuyaux flexibles,26 raccordés aux sorties de soutirage 13', les modules de même étage se remplissent en parallèle sans changement quant au principe de transfert en cascade des masses d'eau.

Grâce au système d'évacuation d'air mis en place au moyen des tuyaux d'air 35, le remplissage des modules peut se faire normalement sans compression d'un volume d'air emprisonné dans les différents modules.

Lorsque tous les réservoirs 11 de tous les modules 10 sont pleins, l'excédant d'eau qui arrive dans le réservoir du module 10a de plus haut étage pourra s'évacuer dans le tuyau de trop-plein 40 via la ou les ouvertures d'évacuation 42 qui, pour ce module seulement, sont libres de toute obstruction. Les ouvertures d'évacuation des modules inférieurs étant toutes condamnées par les moyens d'obstructions 45 prévus à cet effet.

Les matériaux de construction des différentes parties du présent dispositif qui sont en contact avec l'eau ne devraient pas être ferreux afin d'éviter toute électrolyse liée au déplacement de l'eau sur deux aciers différents. Une telle électrolyse engendrerait l'érosion de l'un de ces matériaux. On veillera également à ce que ces matériaux respectent également les normes en matière de qualité de l'eau stockée en fonction de son usage projeté. Outre le fait d'employer des matériaux anti-corrosifs, on privilégiera également les matériaux suffisamment opaques pour empêcher le développement d'algues.

Dans ce but, le fibre-plastique est un matériau qui répond à ces exigences. Il offre de plus une grande aptitude à pouvoir acquérir de nombreuses formes diverses et possède une résistance mécanique suffisante.

En vue de retenir les feuilles mortes ou tout autre débris indésirable, une grille de filtration peut être montée sur la gouttière, avant le raccordement du dispositif à l'amorce de la descente des eaux.

A titre non limitatif, on mentionnera que les diamètres des modules 10 peuvent typiquement être de l'ordre de 30 à 100 centimètres.

On veillera à ce que le montage du dispositif soit fait sur des toitures saines, exemptes de rouille. Selon l'usage de l'eau récoltée, on évitera les toitures en tôle ainsi que celle fabriquées à partir de fibro-béton et de fibres-ciment ou d'éternit.

Suivant la hauteur de la colonne 1, les modules pourront être fixés au mur du bâtiment au moyen de colliers par exemple.

## Revendications

1. Dispositif de stockage des eaux pluviales destiné à être raccordé à une gargouille ou à une amorce de tuyau de descente des eaux d'une gouttière ou d'un chéneau, comprenant une pluralité de modules (10, 10a, 10b, 10c) étagés et reliés les uns aux autres par des moyens de raccordement (20) incluant au moins une entrée (12), une sortie d'eau (13) et une évacuation d'air (35), **caractérisé en ce qu'**il comprend au moins une colonne (1) de ces modules (10) dans laquelle au moins les modules (10a, 10b) disposés au-dessus de celui du plus bas étage (10c) comprennent chacun au moins un siphon (30) dont l'extrémité aval (33) est reliée au module d'étage immédiatement inférieur par lesdits moyens de raccordement (20).

2. Dispositif selon la revendication 1, **caractérisé en ce que** les moyens de raccordement (20) d'au moins un des modules (10) comprennent au moins un tuyau d'amenée (21) traversant la paroi supérieure (14) de ce module par l'entrée d'eau (12) et débouchant en son extrémité aval (23) dans la partie inférieure (15') de ce dernier.

3. Dispositif selon la revendication 2, **caractérisé en ce que** l'extrémité amont (31) du siphon (30) se situe à plus grande distance du fond intérieur (15) du module (10) que n'est l'extrémité aval (23) du tuyau d'amenée (21).

4. Dispositif selon la revendication 1, **caractérisé en ce que** les modules (10) d'une même colonne (1) sont traversés par au moins un tuyau dit de trop-plein (40) comprenant au moins une ouverture d'évacuation (42) située dans la partie interne supérieure (14') du module (10a) du plus haut étage.

5. Dispositif selon la revendication 4, **caractérisé en ce que** le tuyau de trop-plein (40) est constitué par l'aboutement étanche d'une pluralité de tronçons (40') agencés à l'intérieur desdits modules (10) à raison d'au moins un tronçon (40') par module.

6. Dispositif selon la revendication 4, **caractérisé en ce que** le siphon (30) du module (10a) du plus haut étage a son extrémité supérieure (32) située en dessous du niveau de l'ouverture d'évacuation (42) du tuyau de trop-plein (40).

7. Dispositif selon la revendication 5, **caractérisé en ce que** la partie interne supérieure (41) des tronçons (40') équipant les modules (10) comprend au moins une ouverture d'évacuation (42) et **en ce qu'**un moyen d'obstruction (45) stoppe l'écoulement des eaux au travers de cette dernière.

8. Dispositif selon la revendication 7, **caractérisé en ce que** le moyen d'obstruction (45) est constitué par l'emboîtement de deux tronçons (40') adjacents.

9. Dispositif selon la revendication 8, **caractérisé en ce que** l'aboutement des tronçons (40') est réalisé par emboîtement du tronçon (40') du module supérieur (10a, 10b) au moins jusqu'au niveau de l'ouverture d'évacuation du tronçon (40') du module inférieur (10b, 10c).

10. Dispositif selon la revendication 1, **caractérisé en ce qu'**une trappe de visite (50) est ménagée dans la partie inférieure (15') de chaque module (10).

11. Dispositif selon la revendication 1, **caractérisé en ce qu'**au moins un module (10) d'au moins une colonne (1) n'est pas situé sur le même axe vertical que le module adjacent.

12. Dispositif selon la revendication 1, **caractérisé en ce que** chaque module (10) comprend, à l'extérieur de ses parties supérieure (14') et inférieure (15'), un moyen d'assemblage (60) pourvu d'une ouverture de raccordement (65).

13. Dispositif selon la revendication 1, **caractérisé en ce que** les modules (10) sont constitués de matériaux anti-corrosifs et sont suffisamment opaques pour empêcher le développement d'algues.

14. Dispositif selon l'une des revendications précédentes, **caractérisé en ce que** tous les modules (10) sont identiques.
